# EUROPEAN PATENT APPLICATION

(11) **EP 3 995 671 A1**
(43) Date of publication of application: **11.05.2022**
(21) Application number: 20205717.0
(22) Date of filing: 04.11.2020
(51) Int. Cl.: F01D 21/08, F01D 25/16, F02C 7/06, F16C 19/52, H02K 5/173, H02K 5/24

(54) **SYSTEM AND METHOD FOR STIFFNESS CONTROL**

(71) Applicant: Rolls-Royce Deutschland Ltd & Co KG, 15827 Blankenfelde-Mahlow (DE)
(72) Inventor: CICIRIELLO, Lucia, 15827 Blankenfelde-Mahlow (DE)
(74) Representative: Maikowski & Ninnemann Patentanwälte Partnerschaft mbB

(57) **Abstract**

A system (1A-1F) comprises a first component (26) being rotatably mounted with respect to a second component (24), wherein a clearance (Ca, Cr, θa) is provided that allows relative displacement of the first component (26) with respect to the second component (24); an active device (41; 48A, 48B; 70) configured to apply a force on the first component (26), on the second component (24) and/or on a part (64) supporting the first component (26) against the second component (24); and a controller (44) controlling the active device (41; 48A, 48B; 70) based on a target value indicative for a range of a displacement of the first component (26) with respect to the second component (24) and/or on a target value indicative for a stiffness of at least one of the first and second components (26, 24).

## Description

The present disclosure relates to a system and method for controlling a displacement of a first component relative to a second component, to an engine and to a corresponding controller.

Rotating machinery such as gas turbine engines, comprise one or more rotating elements, e.g., shafts. On the shafts of gas turbine engines, for example, compressors and/or turbines are mounted to provide for rotation of these components. In general, at least two bearings are provided to allow for a controlled rotation of the shafts. In some cases, several shafts are provided, which may be coaxial, i.e. with two or more shafts rotating about a common axis. Similar arrangements are also provided in other machine types, in particular other types of aircraft engines.

A common problem in the field of such machines is controlling the level of vibration. Vibration may be caused by imbalances of the shaft and supported rotatable elements, such as compressor and turbine discs and blades, and also by external forcing such as aircraft maneuvers and aerodynamic forces. Damping systems such as fluid dampers are commonly employed to reduce vibrations.

Many parts in such types of machines have to be mounted with a certain play, in some cases to allow an assembly, in other cases to allow relative motion of parts, in further cases due to thermal expansion and shrinking, and in yet further cases due to wear. When a rotating element has too much play, increased levels of vibration may occur, and the operational characteristics of the machine may be impaired.

It is an object to improve operational characteristics of rotating machinery.

According to an aspect there is provided a system comprising a first component being rotatably mounted with respect to a second component, wherein a clearance is provided that allows relative displacement of the first component with respect to the second component other than said rotation. For example, the relative displacement may be a relative translation or a tilting. The system further comprises at least one active device configured to apply a force on the first component, on the second component and/or on a part supporting the first component against the second component, and a controller controlling the active device based on a target value indicative for a range of a displacement (e.g., indicative for a maximum displacement) of the first component with respect to the second component and/or based on a target value indicative for a stiffness of at least one of the first and second components, particularly so as to modify the range of a displacement (e.g., of a maximum displacement) of the first component with respect to the second component.

This is based on the finding that in different operating conditions, larger or smaller clearances between rotating parts can be desirable, e.g., due to thermal expansion of parts at different temperatures, differently acting forces and the like. Thus, by controlling a force on the first, rotatable component based on a target value indicative for a maximum displacement, the system can be adapted dynamically to different operating conditions, so that the operational characteristics of the system may be significantly improved. In particular, vibrations may be reduced in various operating conditions.

Optionally, the active device is adapted to apply the force on the first component and/or on the second component such that the stiffness (e.g., the static stiffness) of the first component and/or the second component and/or of its mounting is modified. This allows to precisely modify the available displacement for the first component.

The force that the active device is adapted to apply may be a non-contact force, e.g., a magnetic force or an electric force. By this, movable parts that themselves could be subject to wear may be avoided. Further, such active device allow for a particularly precise control. The controller may regulate the non-contact force (in particular by regulating the magnetic flux) to set the target value. It is worth noting that by applying the non-contact force the clearance may be enlarged or decreased. The system may provide an active non-contact stiffness control. In particular, the system can be used for a clearance control.

According to an embodiment the active device comprises one or more electric coils. By this, a simple but effective setup is possible. The one or more coils may be part of a magnetic bearing or of an electrical drive. This allows a synergistic use of active components. It is worth noting that the system may comprise the magnetic bearing. Further, the system may comprise mechanic (e.g., roller or journal) bearings that support the first component. In particular, the system may be adapted such that the first component will be operational (and rotatably supported) when the magnetic bearing is deactivated. That is, the mechanical bearings may be adapted to carry the weight and enable operation of the first component, while the controller may be activated, e.g., in certain operational conditions.

Optionally, the active device is adapted to exert a radial force with respect to a rotational axis of the rotation of the first component relative to the second component. Alternatively or in addition, the active device is adapted to exert an axial force with respect to a rotational axis of the rotation of the first component relative to the second component.

According to an embodiment a bearing between the first and second components defines at least a part of the clearance. The bearing may be a roller bearing. Such bearings typically have a clearance. This clearance may vary depending on the operating temperatures and wear. By the active device and the controller described herein this clearance may be actively controlled.

For example the first component is a shaft and the second component is a support structure that carries the shaft. A turbine and/or fan and/or compressor may be mounted on the shaft.

According to an embodiment the controller stores at least two target values, e.g., displacement-range (e.g., maximum-displacement) and/or stiffness target values (which may be different or the same). For example, each of the at least two (e.g., displacement-range (e.g., maximum-displacement) and/or stiffness) target values may be provided for (and associated with) one of at least two different operating conditions of the system, e.g., a higher-load condition and a lower-load condition. For example, in the different operating conditions the temperature of the first and/or of the second component is different.

Optionally, one of the operating conditions is a transient condition. As an example, blades with variable pitch may be mounted on the shaft. An operation during adjustment of the pitch is an example for such a transient condition. By increasing or releasing the force applied by the active device it is possible to hold the shaft tighter or with more play in order to compensate for a slap by the change of the pitch.

The controller may store a look-up table comprising parameters to control the active device, e.g., for at least two different operating conditions of the system. This allows a simple design of the controller and a precise fine-tuning.

The system may further comprise at least one sensor to measure a physical parameter, e.g., a temperature, a displacement of the first component relative to the second component and/or a vibration. Optionally, the controller comprises a closed loop control. The closed loop may use a value measured by the at least one sensor as feedback parameter. This allows to adapt the control to changing conditions.

According to an aspect, an engine, in particular an engine for an aircraft, is provided. The engine comprises the system according to any aspect or embodiment described herein. For example, the engine may be an electrical engine, a gas turbine engine or a hybrid engine.

According to an aspect, a controller is provided for controlling the active device of the system of any aspect or embodiment described herein based on a target value for a range of a displacement (e.g., of a maximum displacement) of the first component with respect to the second component and/or based on a target value indicative for a stiffness of at least one of the first and second components.

According to an aspect, a method for controlling a displacement of a first component relative to a second component is provided, the first component being rotatably mounted with respect to a second component, wherein a clearance is provided that allows relative displacement of the first component with respect to the second component, wherein an active device is configured to apply a force on the first component and/or on the second component. The method comprises controlling the active device based on a target value for a range of a displacement (e.g., for a maximum displacement) of the first component with respect to the second component and/or based on a target value indicative for a stiffness of at least one of the first and second components. The method may use the system and/or controller according to any aspect or embodiment described herein.

According to an aspect, a method to design a component is provided. The method comprises determining an optimal stiffness for a given operating condition by controlling a displacement of a first component relative to a second component in accordance with the method described above for different target values, and determining a design of at least one part of the system based on the determined optimal stiffness.

Embodiments will now be described by way of example only, with reference to the schematic Figures, in which:
- Figure 1: is an aircraft having a plurality of gas turbine engines;
- Figure 2: is a sectional side view of a gas turbine engine;
- Figure 3: is a close up sectional side view of an upstream portion of a gas turbine engine;
- Figure 4: is a partially cut-away view of a gearbox for a gas turbine engine;
- Figures 5 to 11: are views of different systems for controlling a displacement of a first component relative to a second component;
- Figure 12: is a diagram showing a load versus a static displacement of a rotor with respect to a stator;
- Figure 13: is a view of a system for controlling a displacement of a first component relative to a second component and a diagram illustrating adjustable stiffness;
- Figure 14: is a view of a system for controlling a displacement of a first component relative to a second component with a magnetic bearing; and
- Figure 15: is a method for controlling a displacement of a first component relative to a second component.

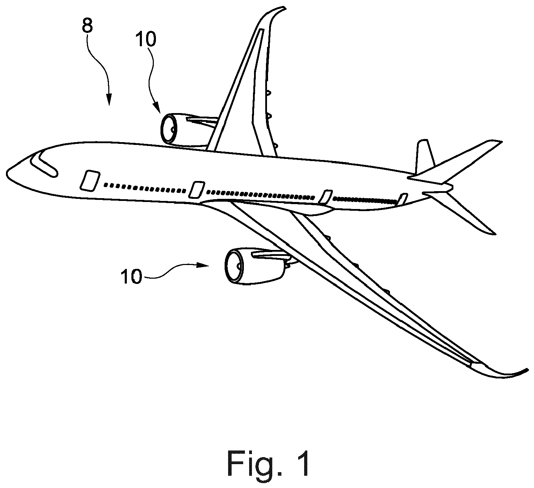

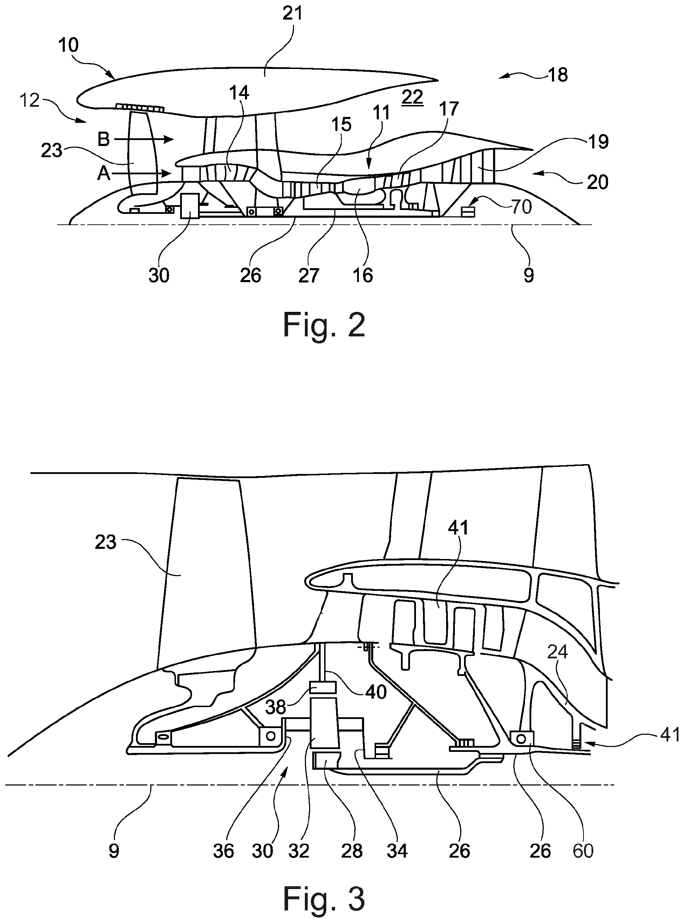

Figure 1 shows an aircraft 8 in the form of a passenger aircraft. The aircraft 8 comprises several (i.e., two) gas turbine engines 10 in accordance with Figure 2.

Figure 2 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 3. The low pressure turbine 19 (see Figure 2) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

The gas turbine engine 10 further comprises an electrical drive 70, see Figure 2. The electrical drive 70 can be used as a motor and as a generator, but could alternatively be only a motor or generator. The electrical drive 70 comprises a stator that is fixed with respect to the stationary supporting structure 24, and a rotor that is fixed to the one of the shafts 26, 27, here to shaft 26.

As shown in Figure 3 the gas turbine engine 10 also comprises bearings 60 (one of which is shown in Figure 3) and a magnetic bearing 41 for the shaft 26.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

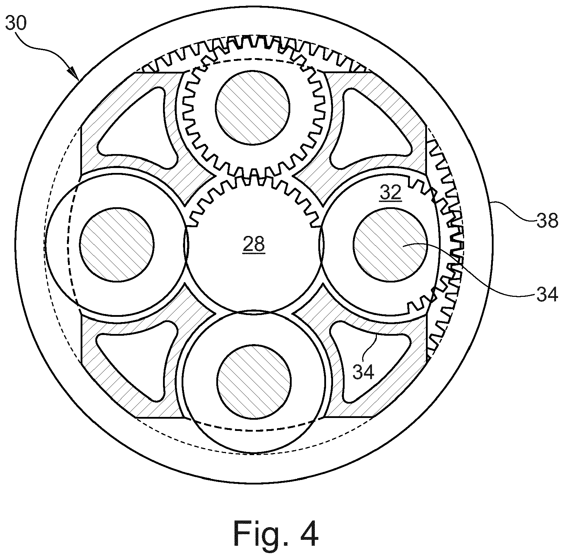

The epicyclic gearbox 30 is shown by way of example in greater detail in Figure 4. Each of the sun gear 28, planet gears 32 and ring gear 38 comprise teeth about their periphery to intermesh with the other gears. However, for clarity only exemplary portions of the teeth are illustrated in Figure 4. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 3 and 4 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 3 and 4 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 3 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 3. For example, where the gearbox 30 has a star arrangement (described above), the skilled person would readily understand that the arrangement of output and support linkages and bearing locations would typically be different to that shown by way of example in Figure 3.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 2 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 2), and a circumferential direction (perpendicular to the page in the Figure 2 view). The axial, radial and circumferential directions are mutually perpendicular.

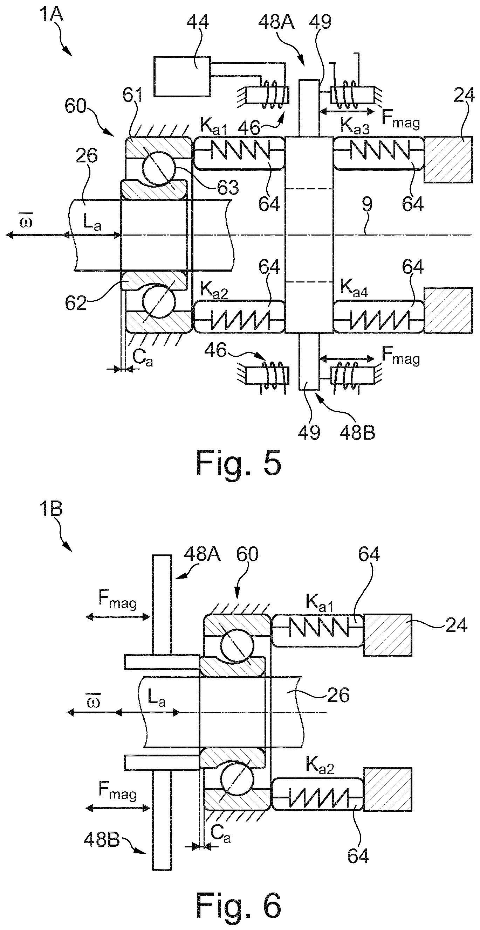

Turning now to Figure 5, a system 1A of the gas turbine engine 10 will be described in detail.

The system 1A comprises a first component, a second component, active devices 48A, 48B and a controller 44. The first component is rotatably mounted with respect to the second component, wherein a clearance Ca is provided that allows relative displacement of the first component with respect to the second component. In the present example, the first component is the shaft 26 that connects the low-pressure turbine 19 with the low-pressure compressor 14, but in general it could be any other shaft of the gas turbine engine 10 or another type of engine. The second component is, in this example, the stationary support structure 24, but it could alternatively be another component, e.g., another shaft, e.g., shaft 27. For brevity, the stationary support structure 24 will be referred to as structure 24 in the following.

The active devices 48A, 48B each are configured to apply a force on parts 64 that support the shaft 26 on the structure 24.

The controller 44 is adapted for controlling the active devices 48A, 48B based on a target value indicative for a range of a displacement, specifically for a maximum displacement of the shaft 26 with respect to the structure 24 and/or on a target value indicative for a stiffness of at least one of the shaft and the structure 24 as will be described in more details further below. For example, the controller 44 is a stiffness controller, in particular a non-contact stiffness controller.

In this example the shaft 26 is mounted rotatably with respect to the structure 24 by means of a bearing 60, which is a roller bearing comprising a stator 61 that is mounted at the structure 24, a rotor that is mounted on the shaft 26, and a plurality of rolling elements 63. Thus, the bearing 60 is a ball bearing in this example. The shaft 26 is rotatable with respect to the structure 24 about the rotational axis 9. In axial direction (with respect to the rotational axis 9) the stator 61 of the bearing 60 is secured against the structure 24 by means of several parts 64. These parts may, for example, be or comprise a spacer, a washer, a seal or the like.

Due to production tolerances, wear, different temperatures or for other reasons there may be a play between some or all of the parts 64, the stator 61 and the structure 24. This may affect the clearance Ca (here, reference is made to the clearance Ca in axial direction) defined at the bearing 60 and thus the possible axial displacement of the shaft 26 relative to the structure 24. Further, each of these parts 64 has a stiffness which is denoted as Ka1 to Ka4 in Figure 5, and illustrated conceptually as springs.

In order to control the clearance Ca and the maximum displacement of the shaft 26 with respect to the structure 24, the active devices 48A, 48B may be operated.

In this example, the active devices 48A, 48B comprise a plurality of coils 46 (in this example each coil 46 is wound around a core). Each of the coils 46 is electrically connected to the controller 44. In the present example, each active device 48A, 48B comprises two coils 46, each one at opposing sides of an anchor 49, but alternatively it is conceivable that each active device comprises only one of such coils 46. Further it is to be emphasized that the system 1A comprises more than the two active devices 48A, 48B, but a plurality of such active devices distributed around the rotational axis 9. On the other hand, in principle only one active device 48A would also be possible.

Each of the active devices 48A, 48B is configured to exert a non-contact force, more specifically, a magnetic force on another part of the system 1A, in the arrangement as shown on the anchor 49. Depending on which of the coils 46 are supplied with electrical current (by one or more current supplies under control of the controller 44), a resulting force Fmag is applied on the anchor 49 (here: in axial direction) and thus on the parts 64 and on the structure 24 and/or on the stator 61 of the bearing 60. As a result, the axial clearance Ca becomes smaller or larger and the stiffness of the shaft 26 is reduced or increased.

The controller 44 is adapted for controlling the active device 48A, 48B based on a target value indicative for a stiffness of at least one of the shaft and the structure 24. As an alternative or in addition, the controller 44 is adapted for controlling the active device 48A, 48B based on a target value indicative for a maximum displacement of the shaft 26 with respect to the structure 24. Further, the controller 44 stores at least two different target values, each for one of at least two different operating conditions of the system 1A. For example, the two operating conditions may be a high-load condition and a low-load condition. In the high-load condition the components of the system 1A become heated with respect to the low-load condition and, therefore, are expanded. The system 1A is designed such that the bearing 60 allows a low-friction rotation of the shaft 26 in both operating conditions. Thus, in the low-load condition, the clearance Ca is larger than in the high-load condition. Therefore, in the low-load condition the controller 44 may control the active devices 48A, 48B so as to apply a stronger force Fmag compared to the high-load condition. Optionally, the same stiffness, clearance Ca or maximum displacement or a value indicative therefore is used as target value for the two different operating conditions. Alternatively, different target values are used, e.g., when a larger clearance is necessary in one of the operating conditions with respect to the other. For example, when one of the operating conditions is a transient condition such as a blade pitch adjustment, a clearance Ca or maximum displacement (and/or a stiffness) can be the corresponding target value that is larger or smaller than the corresponding target value of a steady condition. Further, the operative condition may be based on the load, e.g., the axial load La that acts on the shaft 26. Thus, the target value used by the controller 44 may be based on the load or axial load La.

The controller 44 may apply an open loop control based on stored reference values, e.g., stored in a look-up table. The look-up table may comprise an entry for each operating condition. Alternatively, the controller 44 may apply a closed-loop control based on sensor readings as will be described further below.

It is worth noting that the controller 44 sets a static state of a specific target value for the range of displacement, maximum displacement and/or stiffness. Optionally, this static state is superimposed with a dynamic control to react on vibrations and/or to provide an active damping. In this case, however, the dynamic part is added to the static control target (which serves as a baseline).

Figure 6 shows a system 1B similar to system 1A of Figure 5 so that only the differences are explained in the following. Here, the bearing 60 stator 61 is supported via parts 64 against the structure 24 (without interposed anchor). The active devices 48A, 48B act on the rotor 62 of the bearing 60. Note that the active devices 48A, 48B may be designed as described with reference to Figure 5 and are just shown simplified in Figure 6 (and further following Figures).

The functionality of the controller 44 (also not shown but present in Figure 6 and following Figures) is as described above.

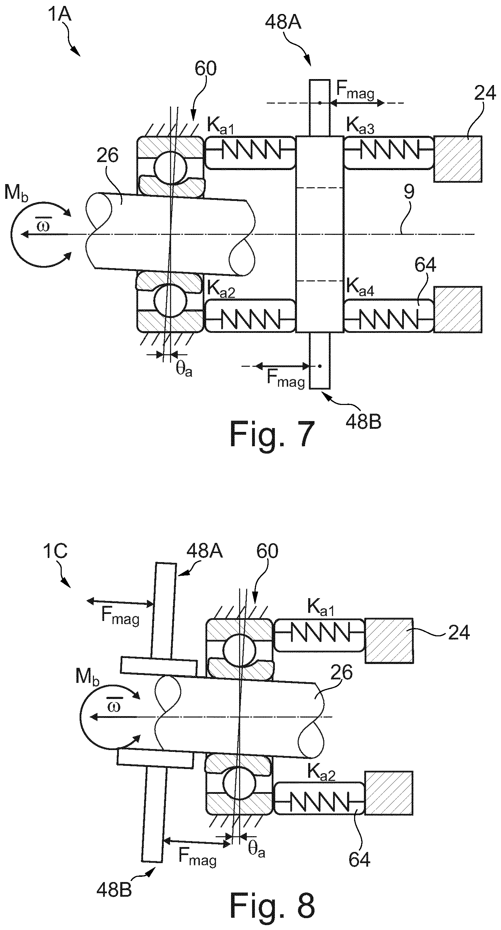

Figure 7 again shows the system 1A of Figure 5. Here, however, the different active devices 48A, 48B are not operated such that they apply symmetric forces Fmag, but asymmetrical. Hence, as an option, the controller 44 of the system 1A is operable to operate the active devices 48A, 48B asymmetrical. By this, an angular clearance θa can be controlled. Thus, a moment, such as a bending moment Mb on the shaft 26 leads to different maximum tilting displacement of the shaft 26 or a section thereof with respect to the structure 24, depending on the setting of the controller 44.

A similar angular clearance θa control is shown in Figure 8, with the system 1C similar to the system 1B described above with reference to Figure 6, but where the active devices 48A, 48B act on the shaft 26 (instead of on the bearing 60 rotor 62). Thus a force of the active devices 48A, 48B that indirectly acts on the bearing 60 is transmitted via the shaft 26. (vice versa in the system 1B of Figure 6).

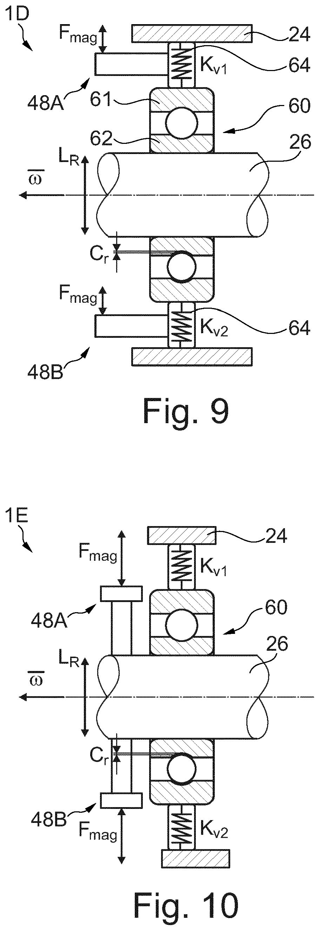

Another system 1D is shown in Figure 9. Therein, the active devices 48A, 48B act on parts 64 (which may be one annular part) that are (or is) interposed between a ball bearing 60 stator 61 and the structure 24. The active devices 48A, 48B are configured to exert radial forces Fmag to control a radial clearance Cr defined by the bearing 60. Radial loads Lr lead to a radial displacement of the shaft 26 within the radial clearance Cr. With regards to the controller 44 and its operation reference is made to the above description.

Figure 10 shows another system 1E for radial clearance Cr control similar to system 1D of Figure 9, but with the active means 48A, 48B acting on the shaft 26, e.g., directly on the shaft 26 or on a part fixedly mounted on the shaft 26.

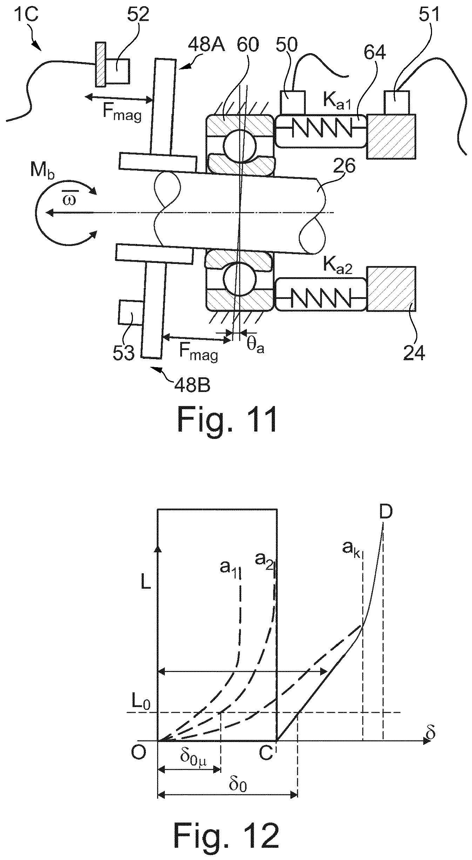

Figure 11 shows the system 1C with additional, optional, sensors 50-53. The sensors 50-53 are arranged on (or in proximity to) the structure, the part 64, the active device 48Bor other locations at which the forces are applied (e.g., bearings 60), and the system 1C (as well as the other systems described herein) may comprise one, more than one or all of these sensors 50-53. The sensors 50-53 may be adapted to measure one or more physical quantities such motion, offsets, angular positions, vibration, torque, force, moment, temperatures, and engine parameters and the like. The sensors 50-53 are communicatively connected to the controller 44. Further, the controller 44 may receive signals from a FADEC such power, NGV positions, fuel intakes or the like in order to define the state of the performance regulation of the engine. One or more of these signals can be used for controlling magnitude, directions and time of application of the non-contact forces (to apply non-contact stiffness) and, optionally, to close a control loop of the controller 44, in order to allow an enlarged or restricted clearance gap.

As already noted, besides the possibility to use an active control system, also a look-up table can be used to activate, deactivate and/or change direction and/or magnitude of the non-contact forces (to apply non-contact stiffness) to achieve the clearance control. The look-up table may contain values obtained by FE calculations and/or test results. A peripheral interface controller, PIC, can send a batch of signals to engine (e.g., of gas turbine engine 10) controllers, for conjoint regulations. Dynamic functions such as active damper can be introduced using the non-contact forces or other systems (e.g., speed controllers) in order to stabilize the system response in transient conditions.

Figure 12 shows a diagram with the static displacement, e.g., of the bearing 60 stator 61 or rotor 62. Therein, the interval 0-C denotes the mechanical clearance, i.e., the range in which the bearing 60 can move. At point C, the bearing 60 parts make contact. Further displacement by increasing load L, e.g., point L0, 50, is based on the stiffness of the mounting, e.g. parts 64, until point D. By activating the active devices 48A, 48B, a range may be restricted, as indicated with δ0µ.

Curves a1, a2, ... an indicate possible control curves of the controller 44. The control curves define load-dependent target value indicative for a maximum displacement of the shaft 26 relative to the structure 24. The load L is, e.g., a radial or axial load or a moment on the shaft 26. (e.g., with respect to the structure 24). The corresponding stiffness is the tangent of the respective curve.

For example, a target maximum shaft 26 displacement x (and corresponding clearance) may be determined based on the current load L (optionally with a range around), the mechanical stiffness K, and the additional non-contact magnetic stiffness kmag: x = L / (k + kmag). Alternatively, e.g., the non-contact magnetic stiffness is used as the target value, e.g., determined from a look-up table that stores target values for different operating conditions. All these variables may be, e.g., dependent on time, Temperature and/or speed.

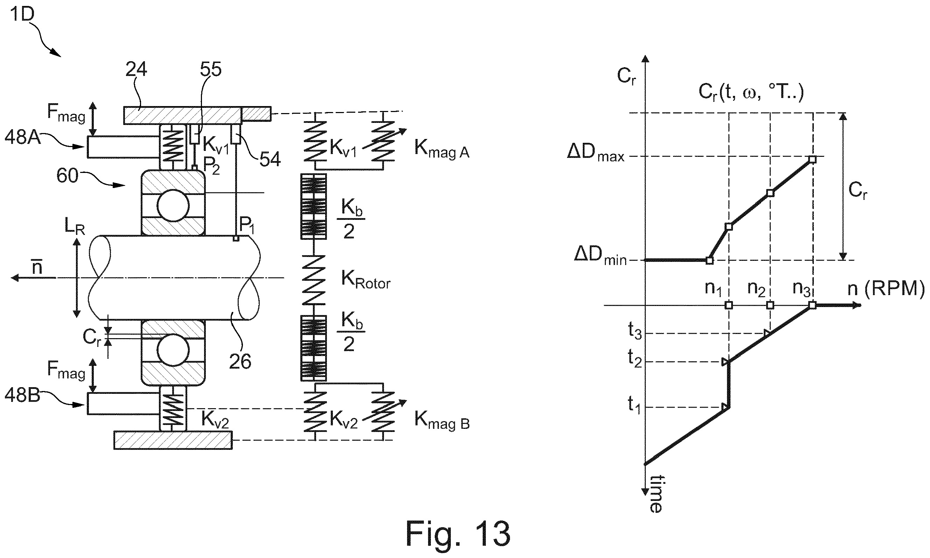

Figure 13 shows the system 1D described above, with additional sensors 54, 55 that measure the distance between the structure 24 and the shaft 26 or the bearing 60 stator 61, respectively. At the right thereof, a functional drawing is added indicating the different stiffness of the various parts and, particularly, the variable stiffness KmagA and KmagB added by the non-contact forces.

The radial clearance Cr (that may be dependent on variables such as time, speed and/or temperature) may thus be calculated as dividing the resultant load (taking into account feedback) divided by the sum of mechanical and magnetic stiffness.

The right part of the Figure shows clearance and maximum displacement target values for different operating conditions at different points in time.

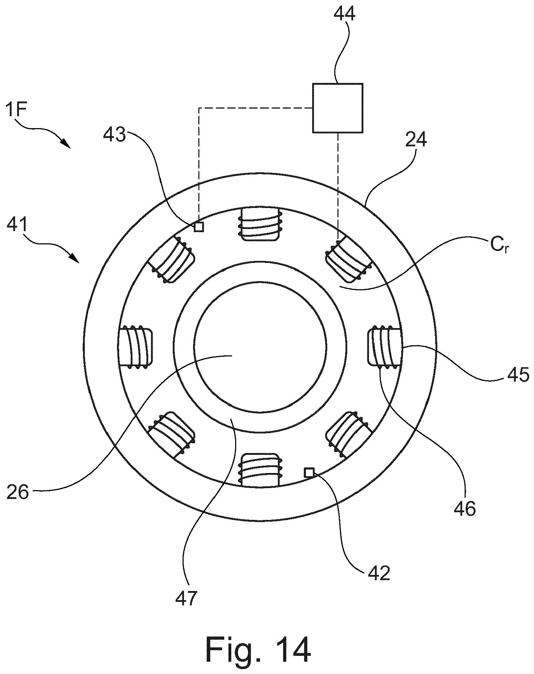

Figure 14 shows a system 1F with a magnetic bearing 41 that may additionally or alternatively be used as active device in any of the systems described herein. A plurality of salient teeth 45 project inwardly from the structure 24. Coils 46 are wound round each salient tooth 45, and are coupled to an electrical power supply of the controller 44 or controlled by the controller 44. An optional rotor lamination 47 mounted around the shaft 26 rotates with the shaft 26, and comprises a magnetic material such as iron. Activation of some or all of the coils 46 allows an asymmetric or symmetric increase of the shaft 26 stiffness. The controller 44 may control the magnetic bearing 41 based on a target value (e.g., indicative for a maximum displacement of the shaft 26 with respect to the structure 24 and/or for a stiffness). Optional sensors 43, 44, e.g., distance sensors, may be used as input to the controller 44 for a closed loop control.

It is worth noting that the magnetic bearing 41 does not carry the shaft 26. The magnetic bearing may be switched off and the shaft will be carried by its mechanical bearings. The same holds for the active devices 48A, 48B.

It is further worth mentioning that the electrical drive 70 of the gas turbine engine 10 may additionally or alternatively be used as an active device by the controller 44 of any system described herein. Further, an air-compressed bearing may be used.

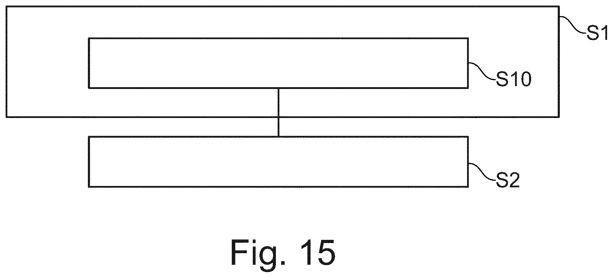

Figure 15 shows a method for controlling a displacement of a first component (e.g., the shaft 26) relative to a second component (e.g., the structure 24), the first component being rotatably mounted with respect to the second component, wherein a clearance Ca, Cr, θa is provided that allows relative displacement of the first component with respect to the second component, wherein an active device is configured to apply a force on the first component, on the second component and/or on a part supporting the first component against the second component. The method comprises step S10: controlling the active device based on a target value indicative for a range of a displacement, e.g., for a maximum displacement, of the first component with respect to the second component and/or on a target value indicative for a stiffness of at least one of the first and second components 26, 24.

Figure 15 further shows a method to design a component, comprising: step S1: determining an optimal stiffness for a given operating condition by controlling a displacement of a first component relative to a second component in accordance with step S10 for different target values; and step S2: determining a design of at least one part of the system based on the determined optimal stiffness.

Thus, the adjustable non-contact stiffness can be utilized in rigs (e.g. power gearbox, PGB, tests) in order to characterize which are the optimal stiffness and clearances trade-offs for the final design. Output of the test would be the definition of the mechanical clearances, and stiffness of the static deformable structures, to be used in the next design iteration.

It is generally noted that the controller 44 may close a control loop on one or more of displacement sensor(s), current(s) of magnetic-flow signals and the effect of non-contact stiffness using look-up tables.

The controller 44 optionally includes a damping, e.g., proportional to the frequency or velocity of a vibration, as measured by one or more vibration sensors. A damping may be added with a 90 degrees phase lag with respect to the displacement of the first component with respect to the second component. In this case the damper effect can act like a structural damping with a complex stiffness where the real part is the non-contact stiffness and the imaginary part is the damping.

In general it is noted that the discussed magnetic loads may be applied in difference locations in order to control clearances between different rotors and rotors and statoric parts to defined targets. The desired level of stability of the system can be obtained by tuning the response of the system (and, optionally, by having in place a design concept where the rotors are isostatic or hyper-static on contact bearing (rolling journal etc.). The non-contact forces may be applied on rotors and/or stators, so that the motion allowed to the rotors or to elastic or movable static parts, that can take place within the available clearances, can be limited as required in one or more predefined operating conditions (e.g., throughout the engine operational envelope). By applying time-dependent magnetic forces, the system stiffness can be controlled and variated in a different manner at each speed and load condition, in order to optimize the position of the rotors at any operational condition. In general the clearances between rotors or between rotors and stators in an aircraft engine may be determined in order to accommodate the largest displacements that are necessary for assembly, to compensate thermal growth and to undergo the operational loads without generating over-stress peaks. Advantageously, the non-contact forces can be provided by the application of electromagnetic forces, e.g. developed in electrical drives or magnetic bearings in order to control clearances between different rotors and rotors and stator parts.

It is worth noting that the systems and methods described herein may also apply auxiliary systems and/or active control methods to reduce a magnetic contamination that the stiffness controller 44 may induce on other (e.g., magnetic sensitive) devices on the engine (e.g., interferences on chip detectors of a PGB may be mitigated when the non-contact stiffness control is actuated to optimize the stiffness of a ring gear mounting of a planetary gearbox). Therein, active (e.g., generating an opposing magnetic field) and/or passive (e.g. by arranging a shield, e.g., mu-metal shield, between the active device and the other device) means and methods can be applied to shield magnetic fields of the active device.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

### List of reference numbers

- 1A-1F: system
- 8: airplane
- 9: principal rotational axis
- 10: gas turbine engine
- 11: engine core
- 12: air intake
- 14: low-pressure compressor
- 15: high-pressure compressor
- 16: combustion equipment
- 17: high-pressure turbine
- 18: bypass exhaust nozzle
- 19: low-pressure turbine
- 20: core exhaust nozzle
- 21: nacelle
- 22: bypass duct
- 23: propulsive fan
- 24: stationary supporting structure
- 26: shaft
- 27: interconnecting shaft
- 28: sun gear
- 30: gearbox
- 32: planet gears
- 34: planet carrier
- 36: linkages
- 38: ring gear
- 40: linkages
- 41: magnetic bearing (active device)
- 42, 43: sensor
- 44: controller
- 45: salient tooth
- 46: coil
- 47: rotor lamination
- 48A, 48B: active device
- 49: anchor
- 50-55: sensor
- 60: bearing
- 61: stator
- 62: rotor
- 63: rolling element
- 64: part
- 70: electrical drive
- A: core airflow
- B: bypass airflow
- Ca, Cr, θa: clearance

## Claims

1. A system (1A-1F) comprising:
- a first component (26) being rotatably mounted with respect to a second component (24), wherein a clearance (Ca, Cr, θa) is provided that allows relative displacement of the first component (26) with respect to the second component (24);
- an active device (41; 48A, 48B; 70) configured to apply a force on the first component (26), on the second component (24) and/or on a part (64) supporting the first component (26) against the second component (24); and
- a controller (44) controlling the active device (41; 48A, 48B; 70) based on a target value indicative for a range of a displacement of the first component (26) with respect to the second component (24) and/or on a target value indicative for a stiffness of at least one of the first and second components (26, 24).

2. The system (1A-1F) according to claim 1, wherein the active device (41; 48A, 48B; 70) is adapted to apply the force on the first component (26) and/or on the second component (24) such that the stiffness of the first component (26) and/or the second component (24) is modified.

3. The system (1A-1F) according to claim 1 or 2, wherein the force that the active device (41; 48A, 48B; 70) is adapted to apply is a non-contact force.

4. The system (1A-1F) according to any of the previous claims, wherein the active device (41; 48A, 48B; 70) comprises one or more electric coils (46) of a magnetic bearing (60) or an electrical drive (70).

5. The system (1A-1C) according to any of the previous claims, wherein the active device (48A, 48B) is adapted to exert an axial force with respect to a rotational axis (9) of the rotation of the first component (26).

6. The system (1A-1E) according to any of the previous claims, wherein a bearing (60) between the first and second components (26, 24) defines at least a part of the clearance (Ca, Cr, θa).

7. The system (1A-1F) according to any of the previous claims, wherein the first component is a shaft (26) and the second component is a stationary support structure (24).

8. The system (1A-1F) according to any of the previous claims, wherein the controller (44) stores at least two displacement-range target values and/or stiffness target values, each for one of at least two different operating conditions of the system (1A-1F).

9. The system (1A-1F) according to claim 8, wherein one of the operating conditions is a transient condition.

10. The system (1A-1F) according to any of the previous claims, wherein the controller (44) stores a look-up table comprising parameters to control the active device (41; 48A, 48B; 70) for at least two different operating conditions of the system (1A-1F).

11. The system (1A-1F) according to any of the previous claims, further comprising at least one sensor (42, 43; 50-55) to measure a temperature, displacement of the first component relative to the second component and/or a vibration, wherein the controller (44) comprises a closed loop using a value measured by the at least one sensor (42, 43; 50-55) as feedback parameter.

12. An engine (10) for an aircraft (8) comprising the system (1A-1F) according to any of the previous claims, wherein the engine (10) is an electrical engine, a gas turbine engine or a hybrid engine.

13. A controller (44) for controlling the active device (41; 48A, 48B; 70) of the system (1A-1f) of any of the previous claims based on a target value indicative for a range of a displacement of the first component (26) with respect to the second component (24) and/or on a target value indicative for a stiffness of at least one of the first and second components (26, 24).

14. A method for controlling a displacement of a first component (26) relative to a second component (24), the first component (26) being rotatably mounted with respect to the second component (24), wherein a clearance (Ca, Cr, θa) is provided that allows relative displacement of the first component (26) with respect to the second component (24), wherein an active device (41; 48A, 48B; 70) is configured to apply a force on the first component (26), on the second component (24) and/or on a part (64) supporting the first component (26) against the second component (24), the method comprising controlling (S10) the active device (41; 48A, 48B; 70) based on a target value indicative for a range of a displacement of the first component (26) with respect to the second component (24) and/or on a target value indicative for a stiffness of at least one of the first and second components (26, 24).

15. A method to design a component, comprising determining (S1) an optimal stiffness for a given operating condition by controlling a displacement of a first component (26) relative to a second component (24) in accordance with claim 14 for different target values; and determining (S2) a design of at least one part of the system (1A-1F) based on the determined optimal stiffness.
